# EUROPÄISCHE PATENTSCHRIFT

(11) **EP 1 880 119 B1**
(45) Veröffentlichungstag und Bekanntmachung des Hinweises auf die Patenterteilung: **08.09.2010**
(21) Anmeldenummer: 06753589.8
(22) Anmeldetag: 12.05.2006
(51) Int. Cl.: F16F 7/10

(54) **VORRICHTUNG UND VERFAHREN ZUR SCHWINGUNGSTILGUNG EINER MECHANISCHEN STRUKTUR**
DEVICE AND METHOD FOR ELIMINATING VIBRATIONS OF A MECHANICAL STRUCTURE
DISPOSITIF ET PROCEDE D'ABSORPTION DES VIBRATIONS D'UNE STRUCTURE MECANIQUE

(30) Priorität: 12.05.2005 DE 102005022097
(43) Veröffentlichungstag der Anmeldung: 23.01.2008
(73) Patentinhaber: Fraunhofer-Gesellschaft zur Förderung der angewandten Forschung e.V., 80686 München (DE); Technische Universität Darmstadt, 64289 Darmstadt (DE)
(72) Erfinder: KLEIN, Christoph, 64289 Darmstadt (DE); MAYER, Dirk, 64295 Darmstadt (DE); MELZ, Tobias, 64281 Darmstadt (DE); HANSELKA, Holger, 64297 Darmstadt (DE)
(86) Internationale Anmeldenummer: PCT/EP2006/004500
(87) Internationale Veröffentlichungsnummer: WO 2006/120014

(56) Entgegenhaltungen:
- US-B1- 6 193 032

## Beschreibung

### Technisches Gebiet

Die Erfindung bezieht sich auf eine Vorrichtung sowie ein Verfahren zur Schwingungstilgung einer mechanischen Struktur mit wenigstens einem mit der mechanischen Struktur in Wirkverbindung stehenden elektromechanischen Wandlerwerkstoff, der mit einer wenigstens eine elektrische Impedanz aufweisenden elektrischen Schaltungsanordnung verbunden ist.

### Stand der Technik

Gattungsgemäße Vorrichtungen zur Schwingungstilgung dienen der gezielten Dämpfung bestimmter Schwingungszustände einer mechanischen Struktur, in dem die Schwingungsenergie der in Schwingungen versetzten mechanischen Struktur gezielt entzogen wird. Aus einer Reihe von Druckschriften, der DE 40 37 786, DE 41 21 746 C2 sowie DE 199 57 774 C1, um nur einige zu nennen, gehen mechanische Tilgersysteme hervor, die allesamt über eine Tilgermasse verfügen, die über eine zumeist aus Elastomerwerkstoff bestehende Federanordnung elastisch an die mechanische Struktur gekoppelt ist und der mechanischen Struktur im Falle einer resonanten Schwingungsüberhöhung Schwingungsenergie entzieht, die letztlich aufgrund der nicht idealen Feder in Wärme umgewandelt wird.

Neben der mechanischen Ausführung bekannter Tilgersysteme sind überdies elektromechanische Tilgersysteme bekannt, die den direkten piezoelektrischen Effekt ausnutzen. Hierbei wird an eine in Schwingung versetzbare mechanische Struktur ein vorzugsweise flächig ausgebildetes piezokeramisches Folienelement appliziert oder in diese integriert. Selbstverständlich ist es auch möglich anstelle einer Piezokeramik zu dieser ähnlich wirkende multifunktionale, vorzugsweise elektromechanische Wandlerwerkstoffe einzusetzen, die grundsätzlich in der Lage sind, Schwingungsenergie in Form von auf den jeweiligen Wandlerwerkstoff einwirkenden Deformationen in elektrische Energie durch entsprechende materialinhärente Ladungspolarisation umzuwandeln, die im weiteren im Wege einer an den Wandlerwerkstoff angeschlossenen elektrischen Impedanz in Wärme umgesetzt wird. Auch können magnetostriktive Materialien hierzu eingesetzt werden, die ihre magnetischen Eigenschaften durch Formänderung zu verändern vermögen, und bei geeigneter elektrischer Beschaltung Einfluss auf die elektrischen Eigenschaften der Beschaltung ausüben, um eine gezielte Dämpfung auf die schwingende Struktur zu bewirken.

Die elektrische Impedanz besteht im einfachsten Fall aus einem Ohm'schen Widerstand, dessen Widerstandswert die Dämpfungseigenschaften des elektromechanischen Tilgungssystems entscheidend zu beeinflussen vermag. Weist die an den elektromechanischen Wandlerwerkstoff angeschlossene elektromechanische Impedanz neben dem Ohm'schen Widerstand auch eine Induktivität auf, so bildet sich bei entsprechender Beschaltung aufgrund der kapazitiven Eigenschaften des piezokeramischen Wandlerwerkstoffes ein elektrischer Schwingkreis aus, durch den die Energieumwandlung von Schwingungsenergie in elektrische Energie deutlich gesteigert werden kann. Ein derartiges auf einer semi-passiven Dämpfung beruhendes elektromechanisches Tilgersystem ist beispielsweise aus einem Beitrag von D. Mayer et al., "Synthetische Induktivitäten für die semi-passive Dämpfung", Tagungsband 5. Magdeburger Maschinenbautage, 19.-20.09.2001, S. 63-72, entnehmbar.

Eine Anpassung der Tilgereigenschaften erfolgt im Falle elektromechanischer Tilgersysteme, die verglichen zu den mechanischen Systemen ungleich kompakter und zuverlässiger in ihrer Funktion ausgebildet werden können, über eine Änderung der jeweiligen elektronischen Bauteilparameter. Üblicherweise erfolgt eine derartige Anpassung im Vorfeld der Umsetzung durch elektronische bzw. elektromechanische Auslegung des elektromechanischen Tilgersystems.

Ein grundsätzliches Problem das mechanischen wie auch elektromechanischen Tilgersystemen anhaftet betrifft die frequenzspezifische Auslegung in Bezug auf eine gezielt zu dämpfende Eigenfrequenz der mechanischen Struktur, an der das Tilgersystem zum Einsatz kommen soll, d.h. das Tilgersystem wird so ausgelegt, dass der Tilgungspunkt und die Eigenfrequenz der mechanischen Struktur zusammenfallen. Typischerweise sind an sich bekannte Tilgersysteme lediglich für einen Tilgungspunkt bzw. über die Dämpfung definiert bzw. für ein sehr schmales Tilgungsband ausgelegt. Ändern sich die mechanischen Eigenschaften der zu dämpfenden mechanischen Struktur, d.h. fallen Tilgungspunkt und Eigenfrequenz der zu tilgenden Struktur nicht mehr überein, so verliert das Tilgungssystem seine Wirkung. In besonders kritischen Fällen ist es sogar denkbar, dass eine Frequenzverstimmung zwischen Tilgungspunkt und Eigenfrequenz der an sich zu dämpfenden mechanischen Struktur dazu führt, dass die mechanische Struktur bei einer geänderten Eigenresonanz schwingt und dies mit Schwingungsamplituden die im Vergleich zu einer ungetilgten mechanischen Struktur deutlich größer ausfallen. Demzufolge besteht der Wunsch, die Tilgereigenschaften bedarfsgerecht, im Idealfall automatisch nachzustimmen. Derartige Ansätze finden sich in der Auslegung sogenannter aktiver bzw. adaptiver Tilgersysteme, bei denen der aktuelle Schwingungszustand einer zu dämpfenden mechanischen Struktur sensoriell erfaßt und in Abhängigkeit des aktuell erfaßten Schwingungszustandes wenigstens ein an der mechanischen Struktur vorgesehener Aktor in Gegenschwingungen versetzt wird, wodurch dem störenden Schwingungszustand der mechanischen Struktur aktiv entgegen gewirkt werden kann.

In US 6 193 032 B1 ist eine Schwingungskontrollvorrichtung beschrieben, die gemäß dem Ausführungsbeispiel in Fig. 6 aus einer piezokeramischen Schwingungseinheit besteht, die mit einer Schwingungs-zu-bedämpfenden Struktur und zudem über eine Schnittstelle mit einer Schaltungsanordnung verbunden ist, in der eine Vielzahl parallel geschalteter Kapazitäten vorgesehen ist. Die piezokeramische Schwingungsanordnung weist an zwei gegenüberliegenden Seiten einer Feder jeweils einen piezokeramischen Wandlerwerkstoff auf. Zusätzlich ist eine Steifigkeit des Federelementes bestimmende Masse an der Oberseite vorgesehen. Die Betätigung der in der Schaltungsanordnung vorgesehenen Schalter kann die Gesamtkapazität der Schaltungsanordnung verändert werden, wodurch letztlich nur die effektive Steifigkeit der Piezokeramikelemente und somit die des Federelementes veränderbar bzw. einstellbar ist.

### Darstellung der Erfindung

Der Erfindung liegt die Aufgabe zugrunde, eine Vorrichtung zur Schwingungstilgung einer mechanischen Struktur mit wenigstens einem mit der mechanischen Struktur in Wirkverbindung stehenden elektromechanischen Wandlerwerkstoff, der mit einer wenigstens eine elektrische Impedanz aufweisenden elektrischen Schaltungsanordnung verbunden ist, derart auszubilden, dass eine nachträgliche und individuelle Anpassung der Tilgereigenschaften des elektromechanischen Wandlerwerkstoffes und der mit diesem elektrisch verbundenen Schaltungsanordnung an sich verändernde Resonanzeigenschaften der mechanischen Struktur möglich wird und dies mit möglichst einfachen und kostengünstigen Mitteln. Die hierzu zu treffenden Maßnahmen sollen überdies bei der Produktentwicklung mechanischer Strukturen einsetzbar sein, um schnell und kostengünstig störende Resonanzschwingungszustände mechanischer Strukturen aufzufinden und zu vermeiden zu helfen.

Die Lösung der der Erfindung zugrunde liegenden Aufgabe ist im Anspruch 1 angegeben. Ein erfindungsgemäßes Verfahren zur Schwingungstilgung einer mechanischen Struktur ist Gegenstand des Anspruches 11. Den Erfindungsgedanken vorteilhafte weiterbildende Merkmale sind Gegenstand der Unteransprüche sowie der weiteren Beschreibung zu entnehmen.

Eine lösungsgemäße Vorrichtung zur Schwingungstilgung einer mechanischen Struktur mit den Merkmalen des Oberbegriffes des Anspruches 1 zeichnet sich dadurch aus, dass die Impedanz der elektrischen Schaltung wenigstens einen Ohm'schen Widerstand und eine Induktivität und/oder eine Kapazität aufweist, die jeweils veränderbar ausgebildet sind, und dass die elektrische Schaltung eine Schnittstelle vorsieht, über die mittels drahtloser oder drahtgebundener Kommunikation mit einer getrennt zur elektrischen Schaltungsanordnung angeordneten Steuereinheit die wenigstens eine elektrische Impedanz individuell veränderlich einstellbar ist.

Auf diese Weise kann ein vollschwingungsfähiger, elektrischer Schaltkreis mit individuell, vorzugsweise online abstimmbären Schwingungseigenschaften bzw. Schwingungszuständen konfektioniert werden, d.h. die elektrische Impedanz wird während des Betriebs der sich in Schwingungen befindlichen mechanischen Struktur bzw. ohne hardwaretechnische Änderungen angepasst.

Durch eine fernsteuerbar einstellbare Anpassung der die elektrische Impedanz bestimmenden elektronischen Bauteilparameter der elektromechanischen Schwingungstilgungsvorrichtung ist es möglich, z.B. die Eigenfrequenzen von mechanischen Strukturen messtechnisch On- oder Offline, entweder erstmalig vor oder kontinuierlich bzw. mehrmals während des Betriebes der mechanischen Struktur zu erfassen und mittels drahtloser oder drahtgebundener Fernsteuerung eine elektronische Anpassung der Tilgereigenschaften ferngesteuert vorzunehmen. Die Fernsteuerung ist insbesondere bei sich bewegenden mechanischen Strukturen drahtlos auszubilden, beispielsweise im Wege einer Infrarotdatenübertragung oder Funkübertragung unter Verwendung beispielsweise des Bluetooth-Protokolls um störende Verbindungsleitungen zu vermeiden. Hierzu ist es erforderlich am Ort des elektromechanischen Tilgersystems eine entsprechende Sende-Empfangseinheit vorzusehen, die in Kommunikation mit einer getrennt von dem Tilgersystem anzuordnenden Steuereinheit tritt, von der aus entsprechende elektronische Anpassungsbefehle abgesetzt werden können. Handelt es sich hingegen um ortsfeste mechanische Strukturen, so dass eine drahtgebundene elektrische Impedanzanpassung durchgeführt werden kann, so gilt es vorzugsweise lediglich am Ort der mit dem elektromechanischen Wandlerwerkstoff verbundenen elektrischen Schaltung eine geeignete Schnittstelle vorzusehen, in die eine Verbindungsleitung zur Steuereinheit einsteckbar ist.

In an sich bekannter Weise eignet sich als elektromagnetischer Wandlerwerkstoff piezokeramische oder elektrostriktiv wirkende keramische Werkstoffe sowie auch magnetostriktive Legierungen. Je nach Ausbildung der zu dämpfenden bzw. zu tilgenden mechanischen Struktur ist der elektromechanische Wandlerwerkstoff in Faser-, Draht-, Patch- oder Folienform auszubilden, und entweder auf die Struktur zu applizieren oder in die mechanische Struktur zu integrieren. Denkbar ist auch der Einsatz von Stapel aus Wandlermaterial, so genannten Piezostacks, oder Verbünden aus Wandlermaterial mit anderen Werkstoffen. In allen Fällen gilt es den elektromechanischen Wandlerwerkstoff mit einer elektronischen Schaltung zu verbinden, in der wenigstens ein Ohm'scher Widerstand, eine Induktivität und/oder eine Kapazität, vorzugsweise zur Ausbildung eines elektrischen Schwingkreises vorgesehen sind. Wenigstens einer der im elektrischen Schaltkreis vorhandenen Komponenten, vorzugsweise alle, verfügen über veränderliche Bauteilparameter, so dass eine an die sich ändernden Resonanzeigenschaften individuell anpassbare elektrische Gesamtimpedanz der elektrischen Schaltung möglich ist. So lässt sich im Wege einer veränderlichen Einstellung des Ohmschen Widerstandes das Dämpfungsverhalten des Schaltkreises einstellen, wodurch zugleich auch das Maß an Schwingungsenergie bestimmt wird, die der schwingenden mechanischen Struktur entzogen wird. Durch die Wahl der Induktivität wird in Analogie zu einem mechanischem Feder-Masse Schwingungssystem die Größe der Masse und durch die Wahl der Kapazität die Steifigkeit bzw. die Federhärte gewählt, um im Bild der vorstehenden Analogie aus Mechanik zu bleiben.

Durch die lösungsgemäße fernsteuerbare Einstellung der die Tilgungseigenschaften bestimmenden elektronischen Bauteilparameter der elektrischen Schaltung ist es somit möglich, einen beschalteten elektromechanischen Wandler in standardisierter Ausführungsform vorzusehen und diesen an eine mechanische Struktur zu applizieren. Erst im Einsatz der mechanischen Struktur kann diese vermittels des elektromechanischen Tilgersystems vermessen werden, wobei das Tilgersystem individuell auf das aktuelle Schwingungsverhalten der mechanischen Struktur einstellbar ist.

Von besonderem Vorteil derartiger fernsteuerbaren Tilgersysteme ist die Anwendung im Entwicklungsprozess mechanischer Strukturen, während dem in an sich bekannter Weise vielfältige Änderungen zu Zwecken einer Strukturoptimierung hinsichtlich Struktureigenschaften vorgenommen werden. Erst nach Abschluss der Strukturentwicklung können die optimalen, hier elektronischen Tilgerparameter festgestellt werden, die letztlich als feste, nicht veränderbare Schaltungsparameter im Rahmen eines Lowcost-Bauteils in einer unveränderlichen Serienstruktur eingesetzt werden können. Die erfindungsgemäße Vorgehensweise zur Schwingungstilgung mechanischer Strukturen unter Verwendung einer fernsteuerbar einstellbaren elektrischen Impedanz, die mit dem mit der mechanischen Struktur verbundenen elektromechanischen Wandlerwerkstoffes verbunden ist, eröffnet die Möglichkeit einer zielgerichteten und ökonomischen Bauteilentwicklung unter optimierten Schwingungsvorgaben, d.h. die ermittelten bzw. eingestellten Eigenschaften würden dann als fixierte Bauteilparameter hardwaretechnisch umgesetzt.

Neben der Bauteilentwicklung ist eine weitere interessante Anwendungsmöglichkeit die Wartung von Schwingungen ausgesetzten mechanischen Strukturen, bei denen es gilt in zeitlich festgelegten oder anders, z.B. aus Messungen bestimmbaren Wartungsintervallen ihr Schwingungsverhalten zu überprüfen und gegebenenfalls bei festgestellten Veränderungen im Schwingungsverhalten entsprechende Korrekturen oder gar einen Austausch der Strukturen vorzunehmen. Das lösungsgemäß ausgebildete und fernsteuerbare Schwingungstilgungssystem ermöglicht aufgrund seiner nur geringen Masse, kompakten Ausbildungsform bei Verwendung mikroelektronischer Bauelemente und fehlenden Zu- und Ableitungen im Falle drahtloser Signalübertragung ein Minimum an das struktureigene Schwingungsverhalten störenden Einflüssen, so dass eine nahezu unverfälschte Schwingungsuntersuchung möglich wird.

## Patentansprüche

1. Vorrichtung zur Schwingungstilgung einer mechanischen Struktur mit wenigstens einem mit der mechanischen Struktur in Wirkverbindung stehenden elektromechanischen Wandlerwerkstoff, der mit einer wenigstens eine elektrische Impedanz aufweisenden elektrischen Schaltungsanordnung verbunden ist,
**dadurch gekennzeichnet, dass** die Impedanz der elektrischen Schaltung wenigstens einen Ohm'schen Widerstand und eine Induktivität und/oder eine Kapazität aufweist, die jeweils veränderbar ausgebildet sind, und
dass die elektrische Schaltung eine Schnittstelle vorsieht, über die mittels drahtloser oder drahtgebundener Kommunikation mit einer getrennt zur elektrischen Schaltungsanordnung angeordneten Steuereinheit die wenigstens eine elektrische Impedanz individuell veränderlich einstellbar ist.

2. Vorrichtung nach Anspruch 1,
**dadurch gekennzeichnet, dass** die Kommunikation zwischen der Schnittstelle und der Steuereinheit drahtlos per Funk- oder Infrarot-Technik erfolgt.

3. Vorrichtung nach Anspruch 1 oder 2,
**dadurch gekennzeichnet, dass** die Schnittstelle in Art einer Steckereinheit ausgebildet ist, in die eine Verbindungsleitung zur Steuereinheit fügbar ist.

4. Vorrichtung nach Anspruch 1 oder 2,
**dadurch gekennzeichnet, dass** die Schnittstelle als Sende- und Empfangseinheit ausgebildet ist, die in Kommunikation mit einer in oder an der Steuereinheit vorgesehenen Sende- und Empfangseinheit steht.

5. Vorrichtung nach einem der Ansprüche 1 bis 4,
**dadurch gekennzeichnet, dass** der elektromechanische Wandlerwerkstoff aus wenigstens einer der nachfolgenden Werkstoffklassen besteht: Piezo-Keramik, elektrostriktive Keramik, magnetostriktive Legierung.

6. Vorrichtung nach einem der Ansprüche 1 bis 5,
**dadurch gekennzeichnet, dass** der elektromechanische Wandlerwerkstoff in Faser-, Draht-, Patch- oder Folienform, oder als Stapel aus Wandlerwerkstoff, so genannten Piezostacks, oder Verbünden aus Wandlerwerkstoffen und anderen Werkstoffen ausgebildet ist.

7. Vorrichtung nach einem der Ansprüche 1 bis 6,
**dadurch gekennzeichnet, dass** der elektromechanische Wandlerwerkstoff auf die mechanische Struktur appliziert oder in die mechanische Struktur integriert ist.

8. Verwendung der Vorrichtung nach einem der Ansprüche 1 bis 7 zur Bauteilentwicklung in Form mechanischer Strukturen

9. Verwendung nach Anspruch 8,
**dadurch gekennzeichnet, dass** die Bauteilentwicklung unter optimierten Schwingungsvorgaben erfolgt.

10. Verwendung der Vorrichtung nach einem der Ansprüche 1 bis 7 zur Wartung von mechanischen Strukturen, Überprüfung ihres Schwingungsverhaltens und Durchführung von Korrekturmaßnahmen.

11. Verfahren zur Schwingungstilgung einer mechanischen Struktur mit wenigstens einem mit der mechanischen Struktur in Wirkverbindung stehenden elektromechanischen Wandlerwerkstoff, dessen Steifigkeits-, Masseträgheits- und Dämpfungsverhalten über ein kontrolliertes Abführen von durch Deformation des elektromechanischen Wandlerwerkstoffes erzeugter elektrischer Energie mittels eines wenigstens eine elektrische Impedanz aufweisenden elektrischen Schaltkreises eingestellt wird,
**dadurch gekennzeichnet, dass** die wenigstens eine elektrische Impedanz per Fernsteuerung eingestellt wird,
dass wenigstens ein im elektrischen Schaltkreis vorgesehener Ohm'scher Widerstandswert verändert wird, und
dass wenigstens ein im elektrischen Schaltkreis vorgesehener Induktionswert verändert wird, und/oder
dass wenigstens ein im elektrischen Schaltkreis vorgesehener Kapazitätswert verändert wird.

12. Verfahren nach Anspruch 11,
**dadurch gekennzeichnet, dass** die Fernsteuerung mittels drahtgebundener oder drahtloser Kommunikation durchgeführt wird.

13. Verfahren nach Anspruch 12,
**dadurch gekennzeichnet, dass** die Kommunikation mittels Funk- oder Infrarottechnik durchgeführt wird.

14. Verfahren nach Anspruch 13,
**dadurch gekennzeichnet, dass** als Funktechnik Bluetooth-Technik oder WLAN eingesetzt wird.

## Claims

1. Device for absorbing vibrations of a mechanical structure with at least one electromechanical converter material, which actively connects to the mechanical structure and which is connected to an electric circuit arrangement having at least one electric impedance, **characterised in that** the impedance of the electric circuit has at least one ohmic resistance and an inductance and/or a capacitance, which are respectively variable in configuration, and
that the electric circuit provides an interface, via which by means of a wireless or wire communication with a control unit arranged separately to the electric circuit arrangement the at least one electric impedance is adjustable to be individually variable.

2. Device according to claim 1, **characterised in that** the communication between the interface and the control unit is performed wirelessly using radio or infrared technology.

3. Device according to claim 1 or 2, **characterised in that** the interfaced is configured in the manner of a plug-in unit, into which a connection lead to the control unit can be inserted.

4. Device according to claim 1 or 2, **characterised in that** the interface is configured as a transmitting and receiving unit, which is in communication with a transmitting and receiving unit provided in or on the control unit.

5. Device according to one of the claims 1 to 4, **characterised in that** the electromechanical converter material is composed of at least one of the following classes of material: piezoelectric ceramic, electrostrictive ceramic, magnetostrictive alloy.

6. Device according to one of claims 1 to 5, **characterised in that** the electromechanical converter material is configured in fibre, wire, patch or foil form, or as a stack of converter material, so-called piezo-stacks, or composites of converter materials and other materials.

7. Device according to one of claims 1 to 6, **characterised in that** the electromechanical converter material is applied to the mechanical structure or is integrated into the mechanical structure.

8. Use of the device according to one of claims 1 to 7 for the development of structural parts in the form of mechanical structures.

9. Use according to claim 8, **characterised in that** the development of structural parts is conducted under optimised set vibration conditions.

10. Use of the device according to one of claims 1 to 7 for maintenance of mechanical structures, testing their vibration behaviour and conducting correction measures.

11. Method for absorbing vibrations of a mechanical structure with at least one electromechanical converter material, which actively connects to the mechanical structure, the rigidity, mass inertial and damping behaviour of which is adjusted by means of a controlled removal of electrical energy generated by deformation of the electromechanical converter material by means of an electric circuit having at least one electric impedance,
**characterised in that** the at least one electric impedance is adjusted by remote control, that at least one ohmic resistance value provided in the electric circuit is changed, and that at least one induction value provided in the electric circuit is changed, and/or that at least one capacitance value provided in the electric circuit is changed.

12. Method according to claim 11, **characterised in that** the remote control is conducted by means of wire or wireless communication.

13. Method according to claim 12, **characterised in that** the communication is performed by means of radio or infrared technology.

14. Method according to claim 13, **characterised in that** bluetooth technology or WLAN is used as radio technology.

## Revendications

1. Dispositif pour amortir les vibrations d'une structure mécanique comportant au moins un matériau de conversion électromécanique coopérant avec la structure mécanique, ce matériau étant relié à un circuit électrique ayant au moins une impédance électrique,
**caractérisé en ce que**
- l'impédance du circuit électrique comprend au moins une résistance ohmique et une inductance et/ou une capacité qui sont respectivement variables, et
- le circuit électrique comporte une interface permettant par une communication sans fil ou par fil avec une unité de commande séparée du circuit électrique, de régler de manière variable individuellement au moins une impédance électrique.

2. Dispositif selon la revendication 1,
**caractérisé en ce que**
la communication entre l'interface et l'unité de commande se fait sans fil par une liaison radio ou une liaison par infrarouge.

3. Dispositif selon la revendication 1 ou 2,
**caractérisé en ce que**
l'interface est réalisée sous la forme d'une unité enfichable avec une ligne de liaison disponible pour l'unité de commande.

4. Dispositif selon la revendication 1 ou 2,
**caractérisé en ce que**
l'interface est réalisée sous la forme d'une unité d'émission et de réception qui communique avec une unité d'émission et de réception prévue dans ou sur l'unité de commande.

5. Dispositif selon l'une des revendications 1 à 4,
**caractérisé en ce que**
le matériau convertisseur électromécanique, se compose d'au moins l'une des classes suivantes de matériaux : les céramiques piézo-électriques, les céramiques électrostrictives et les alliages magnétostrictifs.

6. Dispositif selon l'une des revendications 1 à 5,
**caractérisé en ce que**
le matériau convertisseur électromécanique est réalisé sous la forme de fibres de fil, de patch ou de film ou encore d'une pile de matériaux de conversion, c'est-à-dire de piles-piézo ou de combinaisons de matériaux de conversion et d'autres matériaux.

7. Dispositif selon l'une des revendications 1 à 6,
**caractérisé en ce que**
le matériau convertisseur électromécanique est appliqué sur une structure mécanique ou est intégré dans la structure mécanique.

8. Utilisation du dispositif selon l'une des revendications 1 à 7, pour développer des composants sous la forme de structures mécaniques.

9. Utilisation du dispositif selon la revendication 8,
**caractérisée en ce que**
le développement des composants se fait avec des consignes oscillatoires optimisées.

10. Utilisation du dispositif selon l'une des revendications 1 à 7, pour l'entretien de structures mécaniques, le contrôle de leur comportement oscillatoire et pour effectuer des mesures de correction.

11. Procédé d'amortissement de vibrations d'une structure mécanique comportant au moins un matériau convertisseur électromécanique coopérant avec la structure mécanique et dont la rigidité, l'inertie massique et le comportement en amortissement, peut être réglée par une évacuation contrôlée de l'énergie électrique générée par la déformation du matériau convertisseur électromécanique à l'aide d'un circuit électrique comportant au moins une impédance électrique,
**caractérisé en ce qu'**
- au moins l'impédance électrique est réglable par télécommande,
- au moins une résistance ohmique du circuit électrique est variable, et
- au moins une inductance du circuit électrique est variable et/ou
- au moins une capacité du circuit électrique est variable.

12. Procédé selon la revendication 11,
**caractérisé en ce que**
la télécommande se fait par une communication par fil ou sans fil.

13. Procédé selon la revendication 12,
**caractérisé en ce que**
la communication se fait par radio ou par infrarouge.

14. Procédé selon la revendication 13,
**caractérisé en ce que**
la technique radio utilise la technique Bluetooth ou la technique WLAN.
